# EUROPEAN PATENT APPLICATION

(11) **EP 1 645 848 A1**
(43) Date of publication of application: **12.04.2006**
(21) Application number: 04746591.9
(22) Date of filing: 28.06.2004
(51) Int. Cl.: G01C 21/00

(54) **ROAD GUIDE SYSTEM AND ROAD GUIDE METHOD**

(30) Priority: 10.07.2003 JP 2003273098
(71) Applicant: Apricot Co., Ltd., Tokyo 164-0012 (JP)
(72) Inventor: OSAKA, Shoji, c/o SYNERGY. CO., LTD., Tokyo 1410031 (JP)
(74) Representative: Epping - Hermann - Fischer
(86) International application number: PCT/JP2004/009122
(87) International publication number: WO 2005/005927

(57) **Abstract**

A road guide server (1) stores three-dimensional images of intersections included in road information on which images a reference orientation is defined in a three-dimensional image DB. The road information is stored in a map DB of a map data server (2) as information including information regarding roads and information regarding intersections on the roads. The road guide server (1) reads a three-dimensional image of a specified intersection in response to a request from a user terminal (3) connected thereto via a network (9), and generates an intersection guide image by combining a symbol indicating the road to be taken by the user on the read three-dimensional image in accordance with a guide route searched out by the map data server (2) based on the road information. The road guide server (1) sends the generated intersection guide image to the user terminal (3). Upon receiving the intersection guide image sent from the road guide server (1), the user terminal (3) displays the received three-dimensional guide image in a manner that the display orientation of the image can be changed.

## Description

### Technical Field

The present invention relates to a road guide system and road guide method capable of appropriate road guiding at intersections, etc.

### Background Art

Navigation systems for vehicles, etc. have been popular for long. These navigation systems display the position of the vehicle and the guide route to the destination on a map image. The users check the vehicle position and drive the vehicle along the guide route, and thus can easily arrive at the destination.

Recently, navigations for pedestrians have been tested utilizing a cellular phone, etc. Unexamined Japanese Patent Application KOKAI Publication No. 2000-213949 discloses a technique for a navigation system for pedestrians utilizing a cellular phone.

Navigations for pedestrians such as disclosed in the above-identified publication show the way by characters, etc. in many cases, which have kept the users from an effective use of the navigation.
Furthermore, even if display of a map image is available, it does not ensure an appropriate road guide. Therefore, the users often take the wrong way at the intersections, etc. in a complicated geography or in the bustling area of the town.
Patent Publication 1: Unexamined Japanese Patent Application KOKAI Publication No. 2000-213949

### Disclosure of Invention

### Problem to be Solved by the Invention

The present invention was made in consideration of the above-described circumstances, and an object of the present invention is to provide a road guide system and road guide method capable of appropriate road guiding at intersections, etc.

### Means for Solving the Problem

To achieve the above object, a road guide system according to a first aspect of the present invention is a road guide system in which a server and a network are connected via a network, wherein
the server comprises:
road information storing means for storing road information including information regarding roads and information regarding predetermined guide points;
three-dimensional image storing means for storing three-dimensional images of the guide points included in the road information, on which images a reference orientation is defined;
guide image generating means for reading a three-dimensional image of a corresponding guide point in response to a request from the terminal, and generating a three-dimensional guide image by combining a figure indicating a road to be taken by a user which road is searched out based on the road information on the read three-dimensional image; and
guide image sending means for sending the three-dimensional guide image generated by the guide image generating means to the terminal, and
the terminal comprises:
   guide requesting means for sending information specifying a guide point to the server and requesting the server to give a guide for a road to take at the guide point;
   guide image receiving means for receiving the three-dimensional guide image sent from the server in response to the requesting by the guide requesting means; and
   displaying means for displaying the three-dimensional guide image received by the guide image receiving means in a manner that a display orientation of the three-dimensional guide image is freely changed.

According to this configuration, the road information storing means of the server stores road information including information regarding roads and information regarding guide points predetermined on the roads. The three-dimensional image storing means stores three-dimensional images of the guide points included in the road information on which images at least a reference orientation is defined. The guide image generating means reads a three-dimensional image of a corresponding guide point from the three-dimensional image storing means in response to a request from a terminal, and generates a three-dimensional guide image by combining a figure indicating a road to be taken by the user on the read three-dimensional image. The guide image sending means sends the three-dimensional guide image generated by the guide image generating means to the terminal. The guide requesting means of the terminal sends information specifying a guide point to the server and requests the server to give a guide for a road to take at the guide point. The guide image receiving means receives the three-dimensional guide image sent from the server in response to the request by the guide requesting means. The displaying means displays the three-dimensional guide image received by the guide image receiving means in a manner that the display orientation of the image is freely changed.
As a result, road guiding at intersections, etc. can be appropriately performed.

The three-dimensional image storing means may store three-dimensional images each made up of a plurality of images sequentially captured with a reference orientation defined.

To achieve the above object, a road guide system according to a second aspect of the present invention is a road guide system in which a server and a terminal are connected via a network, wherein
the server comprises:
road information storing means for storing road information including information regarding roads and information regarding predetermined intersections;
three-dimensional image storing means for storing three-dimensional images of the intersections included in the road information, on which images a reference orientation is defined;
guide image generating means for reading a three-dimensional image of a corresponding intersection in response to a request from the terminal, and generating a three-dimensional guide image by combining a figure indicating an orientation for a user to go on the read three-dimensional image in accordance with the reference orientation; and
guide image sending means for sending the three-dimensional guide image generated by the guide image generating means to the terminal, and
the terminal comprises:
   guide requesting means for sending information specifying an intersection to the server and requesting the server to give a guide for an orientation to go to from the intersection;
   guide image receiving means for receiving the three-dimensional guide image sent from the server in response to the requesting by the guide requesting means; and
   displaying means for displaying the three-dimensional guide image received by the guide image receiving means in a manner that a display orientation is freely changed within a predetermined angle.

According to this configuration, the road information storing means of the server stores road information including information regarding roads and information regarding intersections predetermined on the roads. The three-dimensional image storing means stores three-dimensional images of the intersections included in the road information on which images at least a reference orientation is defined. The guide image generating means reads a three-dimensional image of a corresponding intersection from the three-dimensional image storing means in response to a request from a terminal, and generates a three-dimensional guide image by combining a figure indicating the orientation to which the user should go on the read three-dimensional image. The guide image sending means sends the three-dimensional guide image generated by the guide image generating means to the terminal. The guide requesting means of the terminal sends information specifying an intersection to the server and requests the server to give a guide for an orientation to go from the intersection. The guide image receiving means receives the three-dimensional guide image sent from the server in response to the request by the guide requesting means. The displaying means displays the three-dimensional guide image received by the guide image receiving means in a manner that the display orientation is freely changed within a predetermined angle.
As a result, road guiding at intersections, etc. can be appropriately performed.

The guide image generating means may generate a three-dimensional guide image including image portions corresponding to an orientation to which a user has been coming and an orientation to which the user should go to, based on the read three-dimensional image.

The displaying means may display the three-dimensional guide image by changing the display orientation of the three-dimensional guide image from the orientation to which the user has been guided to the orientation to which the user should go to.

To achieve the above object, a road guide method according to a third aspect of the present invention is a road guide method involving use of a system in which a server and a terminal are connected via a network, the server comprising road information storage unit for storing road information including information regarding roads and information regarding predetermined guide points and a three-dimensional image storage unit for storing three-dimensional images of the guide points included in the road information on which images a reference orientation is defined, the method comprising:
a guide requesting step of sending information specifying a guide point from the terminal to the server and requesting the server to give a guide for a road to take at the guide point;
a guide image generating step of reading a three-dimensional image of the corresponding guide point in response to the request at the guide requesting step, and generating a three-dimensional guide image by combining a figure indicating the road to be taken by a user on the read three-dimensional image;
a guide image sending step of sending the three-dimensional guide image generated at the guide image generating step from the server to the terminal;
a guide image receiving step of receiving the three-dimensional guide image sent from the server at the guide image sending step; and
a display controlling step of displaying the three-dimensional guide image received at the guide image receiving step on a display unit of the terminal in a manner that a display orientation of the three-dimensional guide image is freely changed.

According to this method, the guide requesting step sends information specifying a guide point from the terminal to the server and requests the server to give a guide for a road to take at the guide point. The guide image generating step reads a three-dimensional image of the corresponding guide point from the three-dimensional image storage unit in response to the request at the guide requesting step, and generates a three-dimensional guide image by combining a figure indicating a road to be taken by the user on the read three-dimensional image. The guide image sending means sends the three-dimensional guide image generated at the guide image generating step from the server to the terminal. The guide image receiving step receives the three-dimensional guide image sent from the server at the guide image sending step. The display controlling step displays the three-dimensional guide image received at the guide image receiving step on the display unit of the terminal in a manner that the display orientation of the image is freely changed.
As a result, road guiding at intersections, etc. can be appropriately performed.

### Effects of the Invention

According to the present invention, it is possible to provide a road guide system and road guide method capable of appropriate road guiding at intersections, etc.

### Brief Description of Drawings

FIG. 1 is an exemplary diagram showing one example of the configuration of a road guide system according to the embodiment of the present invention.
FIG. 2(A) to FIG. 2(C) are exemplary diagrams for explaining three-dimensional images stored in a three-dimensional image DB of a road guide server.
FIG. 3(A) and FIG. 3(B) are exemplary diagrams showing examples of map information stored in a map DB of a map data server.
FIG. 3(C) is an exemplary diagram showing one example of a map image including a guide route generated by the map data server.
FIG. 4(A) is a perspective diagram showing the appearance of a capture device for capturing a three-dimensional image.
FIG. 4(B) is an exemplary diagram for explaining a state of capturing by the capture device set at an intersection.
FIG. 5 is a block diagram showing one example of the configuration of a user terminal.
FIG. 6(A) and FIG. 6(B) are exemplary diagrams showing examples of intersection guide images displayed on a display unit of the user terminal.
FIG. 7 is a flowchart for explaining a guide requesting process of the user terminal and a road guiding process of the road guide server according to the embodiment of the present invention.
FIG. 8(A) is an exemplary diagram showing one example of an intersection guide image displayed together with a map image on the display unit of the user terminal.
FIG. 8(B) is an exemplary diagram for explaining one example of a map image on which the display range of the intersection guide image of FIG. 8(A) is displayed in conjunction with the intersection guide image.

### Explanation of Reference Numerals

1 road guide server
2 map data server
3 user terminal
31 antenna
32 radio unit
33 ROM
34 RAM
35 computing processing unit 35
36 display unit
37 key operation unit
38 speaker
39 mike
41 tripod
42 camera
43 compass

### Best Mode for Carrying Out the Invention

A road guide system according to the embodiment of the present invention will be explained below with reference to the drawings.

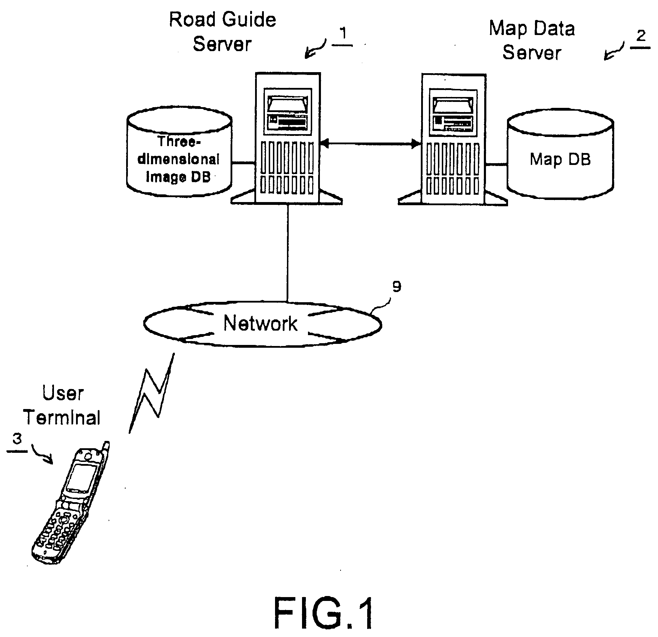

FIG. 1 is an exemplary diagram showing one example of the configuration of the road guide system to be applied to the embodiment of the present invention. As illustrated, the system comprises a road guide server 1, a map data server 2, and a user terminal 3.
The road guide server 1 and the user terminal 3 are connected via a network 9 such as the Internet, etc. The network 9 is not limited to a wired network, but may be configured as a wireless network or may be the combination of these.

The road guide server 1 is a server that comprises a CPU (Central Processing Unit), and memories such as a ROM (Read Only Memory), a RAM (Random Access Memory), etc., and has a three-dimensional image DB (database). The ROM stores a program for executing a later-described process for road guiding, etc.

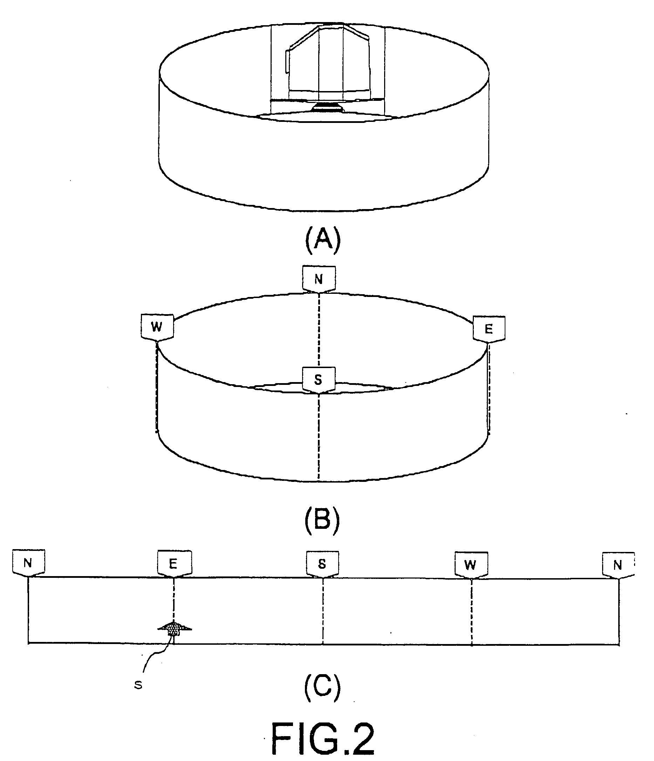

The three-dimensional image DB stores a plurality of three-dimensional images as shown in FIG. 2(A). These three-dimensional images are panoramic images captured all around (360 degrees horizontally) at an intersection predetermined as a guide point, using a capture device to be described later. The three-dimensional images have the orientations defined as shown in FIG. 2(B).

The map data server 2 is a server that comprises a CPU and memories such as a RAM, etc. likewise the road guide server 1, and has a map DB.

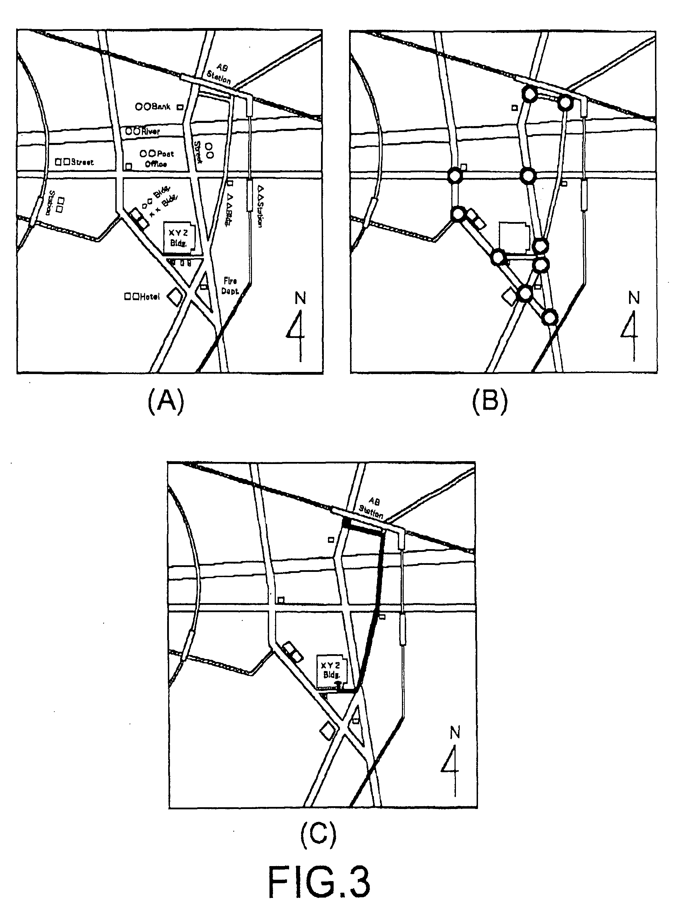

The map DB stores map data as shown in FIG. 3(A). The map data includes not only map images to be displayed, but also road information regarding nodes and links that make up the roads.

A node is information which defines the position, etc. of an intersection, and a link is information which defines the distance, etc, of a road that connects a node to a node. Such road information is used for searching for a guide route that is the shortest among routes from the departure position or the current position to the destination.

The above-described three-dimensional image as shown in FIG. 2(A) is associated with an intersection as shown in FIG. 3(B) (intersection shown in the drawing by a circle) which is predetermined as a guide point.

The road guide server 1 requests the map data server 2 to do a guide route search when receiving guide request information including a departure position and a destination from a user terminal. For example, when requested to search for a guide route from "AB station" as the departure position to "XYZ building" as the destination, the map data server 2 searches out a guide route as shown in FIG. 3(C) (the route blackened in the drawing) based on the road information. Then, the map data server 2 supplies guide map information including the guide route as searched out and a map image as shown in FIG. 3(C) to the road guide server 1.
The map image has links to positional information regarding intersections existing on the guide route.

The road guide server 1 receives the guide map information including the searched-out guide route from the map data server 2. The road guide server 1 determines the orientation to guide to from each intersection (intersection on the guide route) in accordance with the searched-out guide route. For example, in case of a guide route in which an intersection reached by heading to the north should be turned at to the right at 90 degrees, the guide orientation at this intersection is the east.

When the road guide server 1 is requested by the user terminal 3 with an arbitrary intersection designated that it give a guide using a three-dimensional image, it generates an intersection guide image by combining a figure indicating the guide orientation determined in accordance with the guide route on a three-dimensional image of the designated intersection. For example, in case of the east being the guide orientation, the road guide server 1 combines a symbol S indicating the guide orientation on an east-oriented image within the three-dimensional image as shown in FIG. 2(C). The road guide server 1 sends the generated intersection guide image to the user terminal 3.

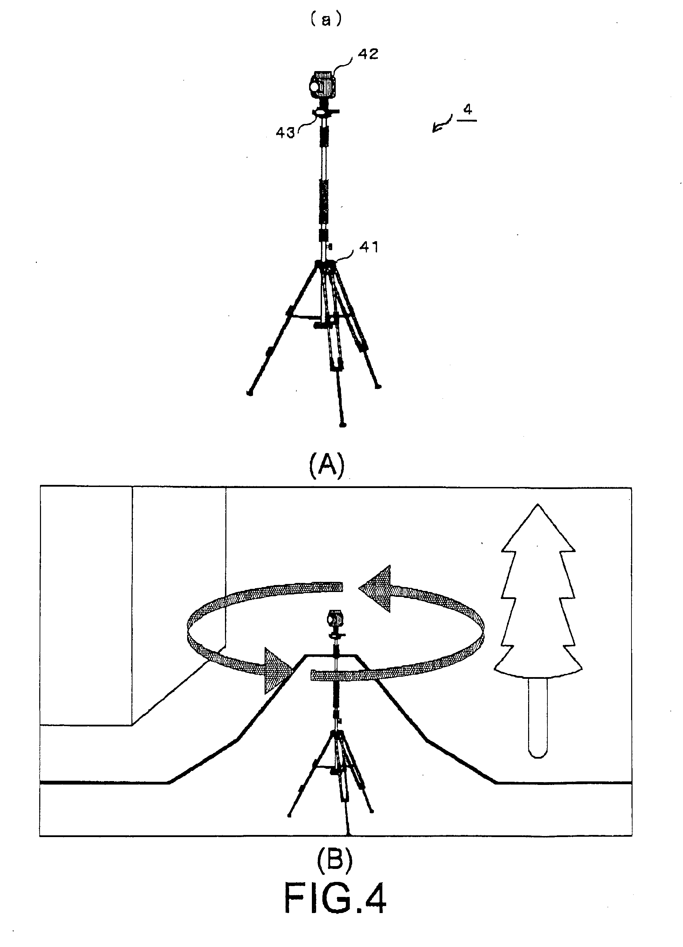

The three-dimensional images stored in the above-described three-dimensional image DB are captured by, for example, a capture device 4 as shown in FIG. 4(A).

As illustrated, the capture device 4 comprises a tripod 41 which supports a camera platform by a support strut and legs, a camera 42 constituted by a digital camera or the like, and a compass (compass magnet) 43 for measuring the orientation.
The capture device 4 allows the camera 42 mounted on the camera platform of the tripod 41 to freely rotate by 360 degrees horizontally. The capture device 4 can measure the face-forward orientation of the camera 42 by the compass 43.

The capture device 4 is set at a capture-object intersection and captures the all-around image as exemplified in FIG. 4(B). For example, after the face-forward orientation of the camera 42 is set to the north by the compass 43, still images are captured by the camera 42 while being rotated by 15 degrees each time. When the images for one round are captured over 24 shots, each image is supplied to a predetermined image processing terminal (a personal computer or the like). The images for one round are corrected by the image processing terminal and turned out in the form of a three-dimensional image (a 360-degree panoramic image) obtained by jointing the images together. At this time, since the capture device 4 started the image capture with the north orientation set as the reference, the generated three-dimensional image has had each orientation defined in accordance with the reference orientation.

The three-dimensional image generated in this way is sent to the road guide server 1 and stored in the three-dimensional image DB. At this time, positional information regarding the captured intersection, etc. is added to the three-dimensional image. The positional information may be input manually by a person in charge. Alternatively, the capture device 4 may further comprise a GPS (Global Positioning System) unit or the like for acquiring positional information so that the positional information acquired by the capture device 4 may be added to the three-dimensional image generated by the image processing terminal.

With reference back to FIG. 1, the user terminal 3 is constituted by a mobile communication device such as a cellular phone, etc. Note that the user terminal 3 may be others such as portable personal computer, etc.

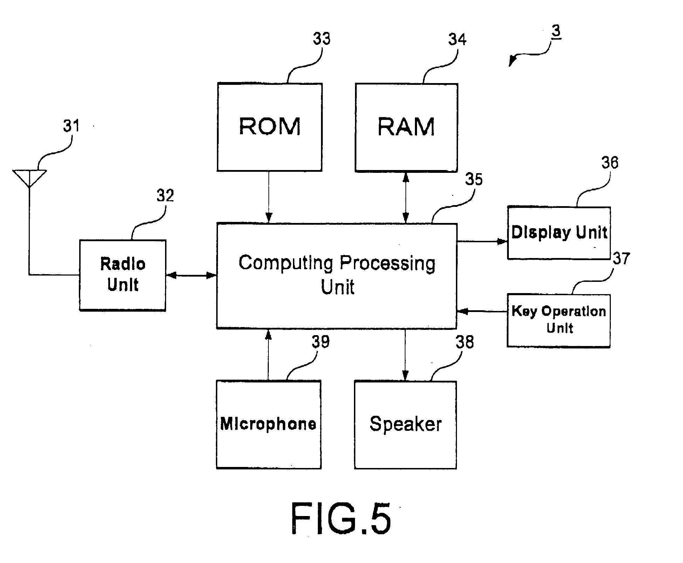

The user terminal 3 comprises an antenna 31, a radio unit 32, a ROM 33, a RAM 34, a computing processing unit 35, a display unit 36, a key operation unit 37, a speaker38, and a mike 39, as shown in FIG. 5.

The antenna 31 receives a radio wave sent from a base station existing in its vicinity, or sends a radio wave to a base station existing in its vicinity.

The radio unit 32 extracts packet data or the like from a radio wave received by the antenna 31, restores a sequence of received data, and supplies the received data to the computing processing unit 35. The radio unit 32 divides transmission data generated by the computing processing unit 35 into packet data or the like, and outputs them via the antenna 31.
The radio unit 32 can obtain the current position (positional information estimated at base stations) of the user terminal 3 by communicating with a plurality of base stations (for example, three base stations) existing in its vicinity.

The ROM 33 stores a program for executing a later-described guide requesting process, etc. The RAM 34 stores various information.

The computing processing unit 35 is constituted by a CPU and peripheral circuits, and controls the user terminal 3 on the whole. The computing processing unit 35 executes a guide requesting process. To be more specific, the computing processing unit 35 obtains map information including a guide route to the destination from the road guide server 1, and requests the road guide server 1 to give a guide by a three-dimensional image at an intersection designated based on the obtained map information.

The display unit 36 is constituted by an LCD (Liquid Crystal Display) or the like. The display unit 36 interchangeably displays a map image including the guide route and an intersection guide image generated by combining a symbol indicating the guide orientation on a three-dimensional image.

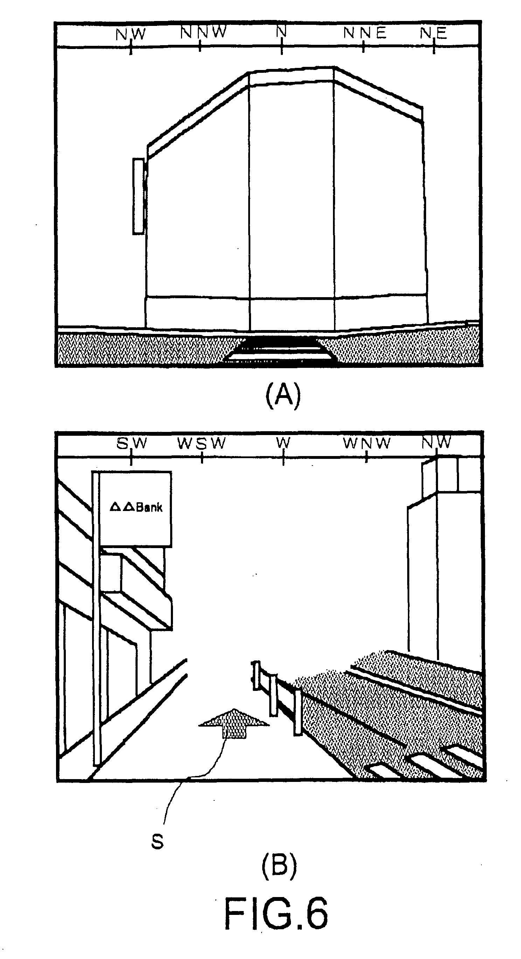

The key operation unit 37 comprises a plurality of key switches, etc. and enters a various instruction information in accordance with operations of a user. For example, when an intersection guide image is displayed on the display unit 36, a key (right direction key, left direction key, etc.) for instructing a change of the orientation to be displayed is operated by the user. In this case, the key operation unit 37 accepts the change of the orientation for displaying the intersection guide image in accordance with the key operated.
To be more specific, the display unit 36 displays an intersection guide image (for example, a north-oriented image) as shown in FIG. 6(A) when the left direction key of the key operation unit 37 is operated. In this case, the display orientation of the intersection guide image is shifted to the left, and the display unit 36 sequentially displays the intersection guide image as the display orientation is changed,
In this example, if the guide orientation is the west, the display unit 36 displays an intersection guide image (a west-oriented image) as shown in FIG. 6(B) including the symbol S indicating the guide orientation.

Returning to FIG. 5, the speaker 38 outputs the voice of a phoning partner user or predetermined music.
The mike 39 enters the voice of the user when phoning and supplies it to the computing processing unit 35.

The operation of the road guide system according to the embodiment of the present invention will be explained below.

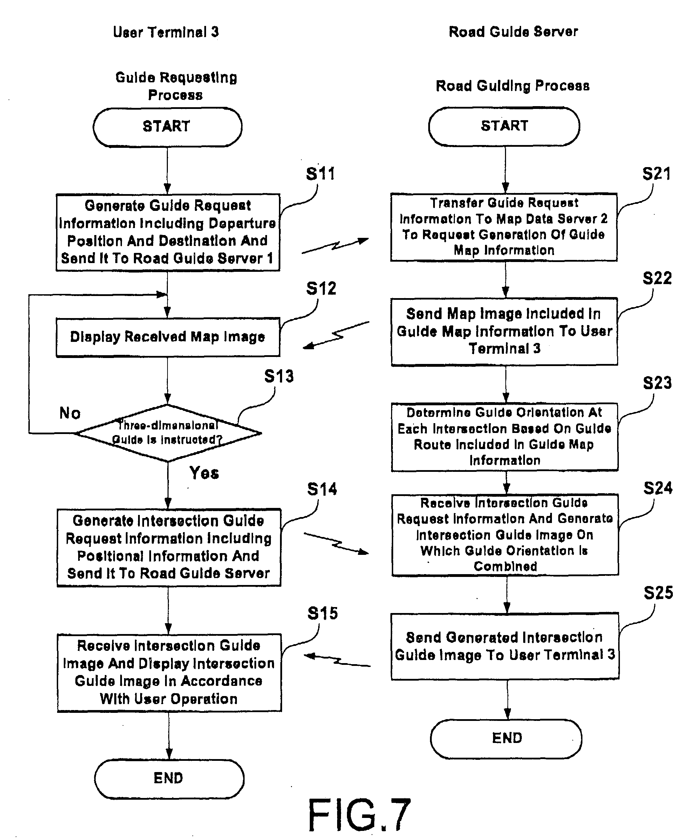

FIG. 7 is a flowchart for explaining a guide requesting process performed by the user terminal 3 and a road guiding process performed by the road guide server 1.

First, the user terminal 3 generates guide request information including the departure position and destination, and sends it to the road guide server 1 (step S11). Specifically, when the user operates the key operation unit 37 and inputs the name of the departure position and the name of the destination, the user terminal 3 generates guide request information including such information. Then, the user terminal 3 sends the generated guide request information to the road guide server 1.

Upon receiving the guide request information, the road guide server 1 transfers the received guide request information to the map data server 2 to request generation of guide map information (step S21).

In response to the request from the road guide server 1, the map data server 2 searches the map data (road network information) in the map DB to find the shortest guide route that connects the departure position to the destination. Then, the map data server 2 supplies the road guide server 1 with guide map information including the guide route found and a map image on which the guide route is combined.

When obtaining the guide map information from the map data server 2, the road guide server 1 sends the map image included in the guide map information to the user terminal 3 (step S22). For example, the road guide server 1 sends a map image as shown in FIG. 3(C) aforementioned to the user terminal 3.

The road guide server 1 determines the guide orientation from each intersection in accordance with the guide route included in the guide map information (step S23). That is, the road guide server 1 specifies any intersection that requires guiding by a three-dimensional image. Prior to a request (request for a guide by a three-dimensional image) from the user terminal 3, the road guide server 1 determines the guide orientation at each intersection along with specifying of the intersection.

When receiving the map image sent from the road guide sever 1 at the above-described step S22, the user terminal 3 displays the received map image on the display unit 36 (step S12). Then, the user terminal 3 determines whether or not the user instructs a guide by a three-dimensional image (step S13). Specifically, the user terminal 3 determines whether or not a predetermined intersection in the map image displayed on the display unit 36 is selected and a request for a guide by a three-dimensional image is input.

The user terminal 3 returns to the above-described step S12 when determining that a guide by a three-dimensional image is not instructed.
To the contrary, when a guide by a three-dimensional image is instructed, the user terminal 3 generates intersection guide request information including positional information specifying the intersection, and sends it to the road guide server 1 (step S14).

Since each intersection in the map image has a link to its corresponding positional information as described above, the user terminal 3 can acquire the positional information corresponding to the selected intersection.

When receiving the intersection guide request information, the road guide server 1 generates an intersection guide image by combining the guide orientation on a three-dimensional image (step S24). For example, the road guide server 1 combines the symbol S indicating the guide orientation on a three-dimensional image and generates an intersection guide image as shown in FIG. 2(C).
Then, the road guide server 1 sends the generated intersection guide image to the user terminal 3 (step S25).

After receiving the intersection guide image, the user terminal 3 displays the intersection guide image while appropriately modifying the display orientation in accordance with the operation of the user (step S15). That is, when the key operation unit 37 (the right direction key, the left direction key, etc.) is operated by the user, the user terminal 3 displays the intersection guide image by modifying its display orientation in accordance with the key operated.
When the display orientation is appropriately modified to be shifted to the image on which the guide orientation is combined, the user terminal 3 will have displayed the intersection guide image including the symbol S indicating the guide orientation as shown in FIG. 6(B).

As explained above, a road guide at the intersection can be performed according to the guide requesting process and road guiding process.

In the above-described embodiment, it has been explained that the user terminal 3 interchangeably displays the map image including the guide route and the intersection guide image. The user terminal 3 may display the intersection guide image simultaneously with the map image. At that time, the user terminal 3 may display the display range of the intersection guide image on the map image in conjunction with the intersection guide image so as to correspond to the display orientation of the intersection guide image.

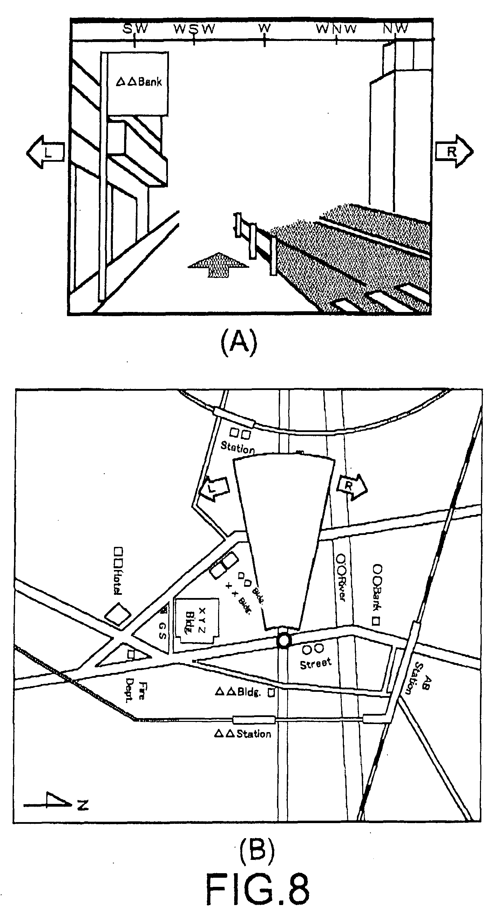

The user terminal 3 displays a display range on the map image as shown in FIG. 8(B), so as to correspond to the display orientation of the intersection guide image as shown in FIG. 8(A). Then, when the display orientation of the intersection guide image shown in FIG. 8(A) is changed in accordance with an operation of the user, the user terminal 3 changes the display range shown in FIG. 8(B) so as to correspond to the changed display orientation.
That is, when the display orientation of the intersection guide image shown in FIG. 8(A) is shifted to the right direction (the R direction in the drawing), the display range shown in FIG. 8(B) is also moved to the right direction (the R direction in the drawing). To the contrary, when the display orientation of the intersection guide image is shifted to the left direction (the L direction in the drawing), the display range is also moved to the left direction (the L direction in the drawing).

In this case, since the display orientation of the intersection guide image can be displayed on the map image, the visibility of the guide route is improved.

In the above-described embodiment, a case has been explained where the symbol indicating the guide orientation is combined on a three-dimensional image by the road guide server 1. However, the symbol may be combined by the user terminal 3.
That is, the road guide server 1 sends information representing the guide orientation together with the three-dimensional image of the intersection to the user terminal 3. Then, the user terminal 3 displays the symbol indicating the guide orientation on the three-dimensional image based on the received information representing the guide orientation.
In this case, the processing load of the road guide server 1 can be reduced.

In the above-described embodiment, a case has been explained where guiding by a three-dimensional image is performed for an intersection, for one example. However, the geographical point that can be guided is not limited to intersections, but is arbitrary.

In the above-described embodiment, it has been explained that the road guide server 1 determines the guide orientation at each intersection in accordance with the guide route searched out by the map data server 2. Instead, the road guide server 1 may determine the guide orientation based on positional information regarding the destination.
In this case, the road guide server 1 may determine the guide orientation at a selected intersection, i.e., the orientation of the destination based on the positional information regarding the destination linked to the destination in the map image and the positional information regarding each intersection linked to each intersection in the map image.

In the above-described embodiment, it has been explained that the map data server 2 supplies the road guide server 1 with guide map information including a searched-out guide route and a map image as shown in FIG. 3(C) in response to a request from the road guide server 1. However, the road guide server 1 may search for the guide route. For example, the road guide sever 1 may obtain guide map information and road information including information regarding roads and guide points included in the guide map information, from the map data server 2, in response to guide request information from the user terminal 3. The road guide server 1 can then determine the guide route based on the obtained road information.

In the above-described embodiment, it has been explained that the capture device 4 acquires positional information of a guide point. However, a GPS unit may be added to the user terminal 3 so that the user terminal 3 may send information acquired by measuring by the GPS unit to the road guide server 1 as the positional information of the guide point.

In the above-described embodiment, it has been explained that the road guide server 1 and the user terminal 3 are connected via the network 9. The network 9 may be constituted by a plurality of networks, and may include, for example, base stations or connection points, etc. In this case, the road guide server 1 and the user terminal 3 communicate with each other via a predetermined base station or connection point.

In the above-described embodiment, a case has been explained where the three-dimensional image is a panoramic image all around over 360 degrees. The three-dimensional image may be a panoramic image over less than 360 degrees. For example, in a case where the three-dimensional image is a panoramic image over 180 degrees, the user terminal 3 can display an intersection guide image with its display orientation ranging from 0 to 180 degrees.
Further, the user terminal 3 may select an image portion for an orientation close to the guide orientation from the received intersection guide image and display an intersection guide image for display orientations ranging from, for example, 0 to 90 degrees including the guide orientation.

Further, when the road guide server 1 is requested by the user terminal 3 to give a guide for a specific intersection existing on the guide route, it selects an image portion of a three-dimensional image that includes the guide orientation to come to that intersection and the guide orientation from that intersection. Then, the road guide server 1 may generate an intersection guide image by combining a symbol indicating the guide orientation on an image for the guide orientation from that intersection.
In this case, the user terminal 3 may display the image portion corresponding to the guide orientation to come to that specific intersection within a frame, and thereafter move the frame to display the image portion corresponding to the guide orientation from that intersection.

In the above-described embodiment, a case has been explained where the road guide server 1 gives a guide for a destination requested by the user terminal 3. The road guide server 1 may give a guide for a destination that is determined beforehand. For example, in case of a casualty arising, the road guide server 1 may guide each user to a shelter (a specific park or the like).

In the above-described embodiment, it has been explained that the road guide server 1 supplies the user terminal 3 with an intersection guide image which is visual information. Voice information telling the guide orientation may be supplied together with the intersection guide image.
Further, the road guide server 1 may supply not only the three-dimensional image of the intersection required to guide, but also additional information such as image information or voice information for, for example, tourist attractions, restaurants, various kinds of shops, etc. around the destination in response to a request from the user terminal 3.

A person skilled in the art could add various modifications to the above-described embodiment without departing from the sprit and scope of the present invention. The above-described embodiment is intended to be illustrative, not to limit the scope of the present invention. Accordingly, the scope of the present invention should be determined not with reference to the foregoing description, but along the whole range of equivalence allowed for the claims below.

This application is based on Japanese Patent Application No. 2003-273098 filed on July 10, 2003 and including specification, claims, drawings and summary. The disclosure of the above Japanese Patent Application is incorporated herein by reference in its entirety.

### Industrial Applicability

As explained above, according to the present invention, it is possible to provide a road guide system, etc. capable of appropriate road guiding at intersections, etc., and the road guide system can be applied to navigation for pedestrians.

## Claims

1. A road guide system in which a server (1) and a terminal (3) are connected via a network, wherein
said server (1) comprises:
road information storing means for storing road information including information regarding roads and information regarding predetermined guide points;
three-dimensional image storing means for storing three-dimensional images of the guide points included in the road information, on which images a reference orientation is defined;
guide image generating means for reading a three-dimensional image of a corresponding guide point in response to a request from said terminal (3), and generating a three-dimensional guide image by combining a figure indicating a road to be taken by a user which road is searched out based on the road information on the read three-dimensional image; and
guide image sending means for sending the three-dimensional guide image generated by said guide image generating means to said terminal (3), and
said terminal (3) comprises:
guide requesting means (35) for sending information specifying a guide point to said server (1) and requesting said server (1) to give a guide for a road to take at the guide point;
guide image receiving means (31, 32) for receiving the three-dimensional guide image sent from said server (1) in response to the requesting by said guide requesting means (35); and
displaying means (36) for displaying the three-dimensional guide image received by said guide image receiving means in a manner that a display orientation of the three-dimensional guide image is freely changed.

2. The road guide system according to claim 1, wherein said three-dimensional image storing means stores three-dimensional images each made up of a plurality of images sequentially captured with a predetermined orientation referred to as a reference.

3. A road guide system in which a server (1) and a terminal (3) are connected via a network, wherein
said server (1) comprises:
road information storing means for storing road information including information regarding roads and information regarding predetermined intersections;
three-dimensional image storing means for storing three-dimensional images of the intersections included in the road information, on which images a reference orientation is defined;
guide image generating means for reading a three-dimensional image of a corresponding intersection in response to a request from said terminal (3), and generating a three-dimensional guide image by combining a figure indicating an orientation for a user to go on the read three-dimensional image in accordance with the reference orientation; and
guide image sending means for sending the three-dimensional guide image generated by said guide image generating means to said terminal (3), and
said terminal (3) comprises:
guide requesting means (35) for sending information specifying an intersection to said server (1) and requesting said server (1) to give a guide for an orientation to go from the intersection;
guide image receiving means (31, 32) for receiving the three-dimensional guide image sent from said server (1) in response to the requesting by said guide requesting means; and
displaying means (36) for displaying the three-dimensional guide image received by said guide image receiving means (31, 32) in a manner that a display orientation is freely changed within a predetermined angle.

4. The road guide system according to claim 3, wherein the guide image generating means generates a three-dimensional guide image including image portions corresponding to an orientation to which a user has been guided and an orientation to which the user should go to, based on the read three-dimensional image.

5. The road guide system according to claim 4, wherein the displaying means (36) displays the three-dimensional guide image by changing the display orientation of the three-dimensional guide image from the orientation to which the user has been guided to the orientation to which the user should go to.

6. A road guide system in which a server (1) and a terminal (3) are connected via a network, wherein
said server (1) comprises:
three-dimensional image storing means for storing three-dimensional images of predetermined guide points, on which images a reference orientation is defined;
road information obtaining means for obtaining road information including information regarding roads and information regarding a corresponding guide point in response to a request from said terminal (3);
guide image generating means for searching out a road along which guiding should be performed based on the road information obtained by said road information obtaining means, reading a three-dimensional image of the corresponding guide point from said three-dimensional image storing means, and generating a three-dimensional guide image by combining a figure indicating the searched-out road along which guiding should be performed on the read three-dimensional image; and
guide image sending means for sending the three-dimensional guide image generated by said guide image generating means to said terminal (3), and
said terminal (3) comprises:
guide requesting means (35) for sending information specifying a guide point to said server (1) and requesting said server (1) to give a guide for a road to take at the guide point;
guide image receiving means (31, 32) for receiving the three-dimensional guide image sent from said server (1) in response to the request by said guide requesting means (35); and
displaying means (36) for displaying the three-dimensional guide image received by said guide image receiving means (31, 32) in a manner that a display orientation of the three-dimensional guide image is freely changed.

7. The road guide system according to claim 6, wherein
said road information obtaining means obtains guide map information including the corresponding guide point,
said guide image generating means further comprises means for generating a map image on which a display range of the generated three-dimensional guide image is displayed based on the guide map information obtained by said road information obtaining means, and said guide image sending means sends the map image together with the three-dimensional guide image to said terminal (3), and
said displaying means comprises means for displaying the display range of the three-dimensional guide image on the map image in a manner that the display range is freely changed in conjunction with the display orientation of the three-dimensional guide image.

8. A server for use in navigation, comprising:
three-dimensional image storing means for storing three-dimensional images of predetermined guide points, on which images a reference orientation is defined;
guide route storing means for storing a guide route searched out in response to a request from a terminal (3) connected via a network (9);
guide image generating means for reading a three-dimensional image of a guide point specified by a guide request from said terminal (3), and generating a three-dimensional guide image by combining a figure indicating a road to be taken by a user on the read three-dimensional image based on the guide route stored in said guide route storing means; and
guide image generating means for sending the three-dimensional guide image generated by said guide image generating means to said terminal (3).

9. A road guide method involving use of a system in which a server (1) and a terminal (3) are connected via a network, said server comprising road information storage unit for storing road information including information regarding roads and information regarding predetermined guide points and a three-dimensional image storage unit for storing three-dimensional images of the guide points included in the road information on which images a reference orientation is defined, said method comprising:
a guide requesting step (S11; S14) of sending information specifying a guide point from the terminal (3) to the server (1) and requesting the server to give a guide for a road to take at the guide point;
a guide image generating step (S24) of reading a three-dimensional image of the corresponding guide point in response to the request at said guide requesting step (S11, S14), and generating a three-dimensional guide image by combining a figure indicating the road to be taken by a user which road is searched out based on the road information on the read three-dimensional image;
a guide image sending step (S25) of sending the three-dimensional guide image generated at said guide image generating step (S24) from the server (1) to the terminal (3);
a guide image receiving step (S15) of receiving the three-dimensional guide image sent from the server (1) at said guide image sending step (S25); and
a display controlling step (S15) of displaying the three-dimensional guide image received at said guide image receiving step (S15) on a display unit of the terminal (3) in a manner that a display orientation of the three-dimensional guide image is freely changed.

10. A road guide method involving use of a server (1) comprising a three-dimensional image storage unit for storing three-dimensional images of predetermined guide points on which images a reference orientation is defined, and a terminal (3) connected to the server (1) via a network, said method comprising:
a guide requesting step (S11, S14) of sending information specifying a guide point from the terminal (3) to the server (1) for requesting a guide for a road at the guide point;
a road information obtaining step of obtaining road information including information regarding roads and information regarding the corresponding guide point in response to the request at said guide requesting step (S11, S14);
a guide image generating step (S24) of searching out a road to be taken by a user based on the road information obtained at said road information obtaining step, reading a three-dimensional image of the corresponding guide point from the three-dimensional image storage unit, and generating a three-dimensional guide image by combining a figure indicating the searched-out road on the read three-dimensional image;
a guide image sending step (S25) of sending the three-dimensional guide image generated at said guide image generating step (S24) to the terminal (3);
a guide image receiving step (S15) of receiving the three-dimensional guide image sent at said guide image sending step (S25); and
a display controlling step (S15) of displaying the three-dimensional guide image received at said guide image receiving step (S15) on a display unit of the terminal (3) in a manner that a display orientation of the three-dimensional guide image is freely changed.
